# FASCICULE DE BREVET EUROPEEN

(11) **EP 2 597 040 B1**
(45) Date de publication et mention de la délivrance du brevet: **12.12.2018**
(21) Numéro de dépôt: 12190650.7
(22) Date de dépôt: 30.10.2012
(51) Int. Cl.: B64G 1/10, G05D 1/00, G06T 7/00, G01C 11/06, G05D 1/08, G06T 7/593, H04N 13/20

(54) **Système d'imagerie spatiale en trois dimensions**
Räumliches 3D-Bildanzeigesystem
Three-dimensional spatial imaging system

(30) Priorité: 24.11.2011 FR 1103580
(43) Date de publication de la demande: 29.05.2013
(73) Titulaire: Thales, 92400 Courbevoie (FR)
(72) Inventeur: Martinerie, Francis, 31860 LABARTHE SUR LEZE (FR); Houzelle, Stéphane, 31880 LA SALVETAT SAINT GILLES (FR)
(74) Mandataire: Brunelli, Gérald

(56) Documents cités:
- JP-A- 2004 351 950
- US-A1- 2004 005 091
- Eurimage Products & Services: "ERS - 1/2", , 31 décembre 2001 (2001-12-31), XP002677733, Extrait de l'Internet: URL:http://www.fcnym.unlp.edu.ar/catedras/ geofoto/geo_html/informacion/pdf/Euroimage /ers.pdf [extrait le 2012-06-14]

## Description

La présente invention porte sur un système d'imagerie spatiale en trois dimensions.

L'imagerie spatiale consiste à prendre régulièrement des images de la Terre entière, ou de zones géographiques spécifiques, avec une précision et un renouvellement d'informations suffisants. La présente invention concerne la fourniture d'images en trois dimensions ou 3D de tout ou partie de la surface terrestre.

Il est connu des systèmes, telle l'application connue sous le nom de "Google Earth" (marque déposée) fournissant des images 3D. Cette application se base sur la compilation d'images en deux dimensions ou images 2D issues de sources hétérogènes, et mises à jour que très rarement, typiquement espacées de plusieurs années.

Il existe des systèmes optiques ou radars d'observations programmés pour couvrir en une ou plusieurs passes des zones géographiques de l'ordre de 10000 km². Une telle solution n'est pas globale, car elle ne couvre que de petites parties de la surface de la Terre.

Il existe également des missions spécifiques ponctuelles globales couvrant la quasi-totalité des terres émergées, en une seule mission de courte durée. Ces systèmes ne permettent pas de mise à jour périodique des informations, et ne couvrent pas le domaine de l'imagerie optique dans le domaine visible de haute résolution (résolutions de quelques dizaines de cm à quelques mètres.

Il existe également des missions radar dites tandem, composée de deux satellites radar volants en formation. Ces solutions ne permettent pas la mise à jour périodique des informations, et ne couvrent pas le domaine de l'imagerie optique.

Il est également connu le document JP 2004 351950 qui divulgue un système d'imagerie spatiale de l'état de l'art.

Un but de l'invention est de pallier les problèmes précédemment cités.

Il est proposé, selon un aspect de l'invention, un système d'imagerie spatiale selon la revendication 1.

Un tel système permet l'acquisition continue d'observations pendant des durées importantes, la mise à disposition d'observations ou images stéréoscopiques récurrentes, précises et globales, ainsi que des mises à jour plus fréquentes.

Par exemple, ledit seuil minimum vaut sensiblement 0°, et/ou ledit seuil maximum vaut 30°.

Dans un mode de réalisation, lesdits moyens de commande sont, en outre, adaptés pour commander les satellites de sorte que deux desdits satellites, aux instants respectifs de prises d'images de la zone géographique de la Terre, soient situés de part et d'autre d'une droite verticale perpendiculaire à ladite zone géographique.

Ainsi, le système proposé fourni une configuration stéréoscopique naturelle, sans équipement embarqué spécifique.

Selon un mode de réalisation, lesdits instants respectifs de prises d'images de la zone géographique de la Terre par les deux satellites sont sensiblement identiques.

Ainsi, lorsque les satellites sont proches, les différences entre les deux acquisitions sont minimales.

Dans un mode de réalisation, lesdits moyens de commande desdits satellites sont adaptés pour commander lesdits au moins deux satellites de sorte que l'espacement entre lesdits satellites permet l'observation de la zone à imager à des instants différents.

L'invention sera mieux comprise à l'étude de quelques modes de réalisation décrits à titre d'exemples nullement limitatifs et illustrés par les dessins annexés sur lesquels :
- la figure 1 illustre schématiquement une constellation de satellites en orbite héliosynchrone ;
- la figure 2 illustre schématiquement la différence de conditions géométriques d'acquisition d'une zone géographique entre deux satellites du système situés à des positions différentes sur un même plan orbital, due à la rotation de la Terre entre les instants de survol de ladite zone par l'un et l'autre desdits satellites, selon un aspect de l'invention ;
- la figure 3 illustre schématiquement un angle d'incidence par rapport au nadir des satellites inférieur à un seuil maximal, en l'espèce de 30°, selon un aspect de l'invention ;
- la figure 4 illustre la situation, de part et d'autre d'une droite verticale perpendiculaire à une zone géographique à prendre en images, aux instants respectifs de prises d'images;
- les figures 5, 6, 7 et respectivement 8, 9 et 10 représentent respectivement des systèmes d'imagerie spatiale en trois dimensions, dans des cas de visibilité simultanée, de visibilité successive, et d'écart maximal entre deux satellites successifs, selon un aspect de l'invention.

Sur l'ensemble des figures, les éléments ayant les mêmes références sont similaires.

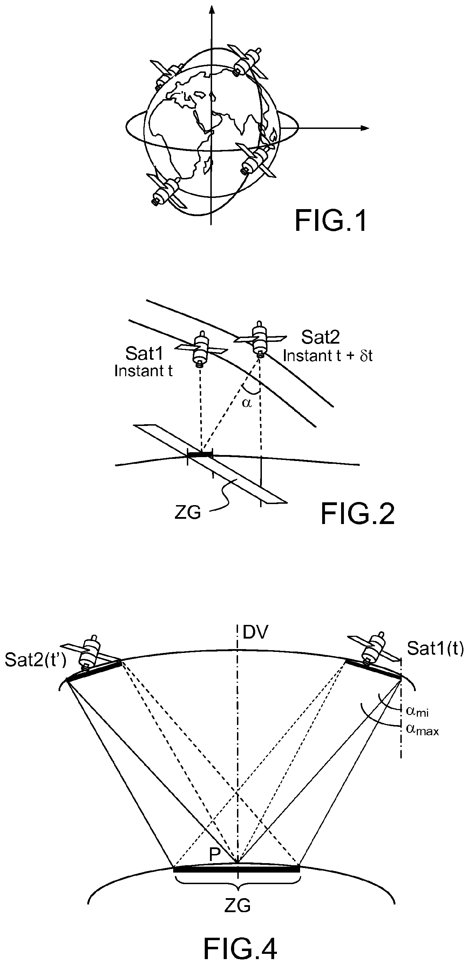

La figure 1 représente un ensemble de quatre satellites en orbite géocentrique sur un même plan orbital, dont on choisit l'altitude et l'inclinaison de façon à ce que l'angle entre le plan d'orbite et la direction du soleil demeure à peu près constant, en dépit de la dérive annuelle du plan d'orbite (précession). Ainsi, un satellite placé sur une telle orbite repasse au-dessus d'un point donné de la surface terrestre à la même heure solaire locale. Ceci est souhaitable lorsqu'on prend des photographies en lumière visible, car l'éclairement solaire est peu variable d'un cliché à l'autre (satellites météos, espions, de télédétection, etc.).

Un exemple prend en compte la rotation de la Terre par rapport au plan de l'orbite :
Un premier satellite passe au-dessus des zones émergées et prend des images de ces zones soit systématiquement au nadir (angles de roulis et de tangage nuls), soit avec une orientation en roulis et/ou tangage et/ou lacet prédéterminée, sous un angle d'incidence par rapport au nadir supérieur à un seuil minimum αₘᵢₙ et/ou inférieur à un seuil maximum αₘₐₓ. Par exemple, ledit seuil minimum vaut sensiblement 0°, et/ou ledit seuil maximum vaut 30°.

L'invention est adaptée à des orbites pour lesquelles l'altitude maximale est de 2000 km.

Ensuite, un des satellites poursuivants arrive à la même latitude avec un angle de roulis commandé qui lui permet de compenser la rotation de la Terre, comme illustré sur la figure 1, et de prendre des images des mêmes zones que le premier satellite, de sorte que, aux instants respectifs de prises d'images de la zone géographique de la Terre, les satellites soient situés de part et d'autre d'une droite verticale perpendiculaire à ladite zone géographique, et que ladite zone géographique est également vue par le satellite poursuivant sous un angle d'incidence par rapport au nadir supérieur à un seuil minimum αₘᵢₙ et/ou inférieur à un seuil maximum αₘₐₓ.

Ces passages successifs permettent d'acquérir une même zone avec des angles de vue différents, ce qui permet ensuite au sol la constitution de modèles numériques de terrain en trois dimensions.

Pour un écartement donné des satellites, l'angle de roulis du satellite poursuivant n'est pas constant et diminue quand il s'approche des pôles. Le principe implique donc un pilotage en roulis et/ou lacet et/ou tangage pendant la prise de vue visant à vérifier que le satellite poursuivant vise toujours la zone prise en images par le premier satellite à une latitude donnée. La commande des satellites vise en fait à compenser le rapprochement des méridiens aux pôles.

La différence temporelle, illustré sur la figure 2, entre les instants de prises de vue de satellites différents de la même orbite dépend de l'écartement des satellites dans le plan orbital et du domaine de variation [αₘᵢₙ αₘₐₓ] de l'angle d'incidence α de prise de vue par rapport au nadir, le nadir est la direction d'un axe imaginaire passant par le centre de la Terre et la position du satellite.

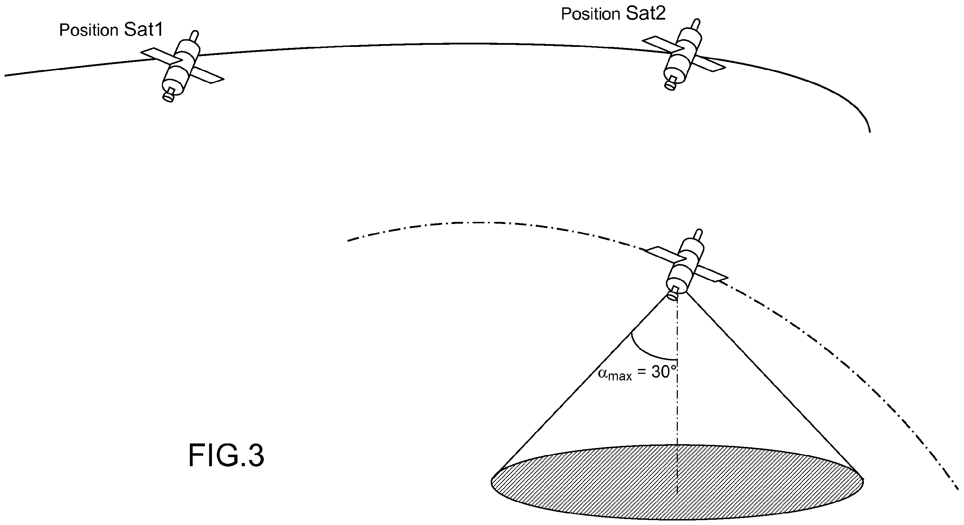

Le système d'imagerie spatiale en trois dimensions selon un exemple comprend :
- au moins deux satellites en orbite géocentrique sur un même plan orbital, chaque satellite étant muni d'un équipement d'imagerie optique en deux dimensions et de moyens de transmission au sol des images en deux dimensions,
- au moins une station de réception de données au sol, reliée à un réseau de communications,
- au moins un centre de traitement des images reçues en deux dimensions desdits satellites pour créer des images résultantes en trois dimensions et de diffusion desdites images résultantes en trois dimensions, ledit centre de traitement étant relié audit réseau de communications, et
- un ensemble de commande desdits satellites adaptés pour commander les satellites, par exemple en le programmant, de sorte qu'une zone géographique de la Terre à prendre en images est vue sous un angle d'incidence par rapport au nadir supérieur à un seuil minimum αₘᵢₙ et/ou inférieur à un seuil maximum αₘₐₓ, comme illustré sur la figure 3.

Par exemple, le seuil minimum αₘᵢₙ peut valoir sensiblement 0°, et/ou ledit seuil maximum αₘₐₓ peut valoir 30°.

L'ensemble de commande peut, en outre, être adapté pour commander les satellites de sorte que deux desdits satellites S1 et S2, aux instants respectifs t et t' de prises d'images d'une zone géographique ZG de la Terre, soient situés de part et d'autre d'une droite verticale DV perpendiculaire à la zone géographique ZG. Par exemple, les instants t et t' respectifs de prises d'images à deux dimensions d'une zone géographique de la Terre par les deux satellites peuvent être sensiblement identiques.

L'ensemble de commande des satellites est adapté pour commander les satellites de sorte que l'espacement entre lesdits satellites permette l'observation stéréoscopique de l'ensemble de la surface terrestre sous des conditions de prises de vue (roulis, tangage de chacun des satellites) diverses, comme illustré ci-après.

L'ensemble de commande des satellites est adapté pour commander un angle de roulis et/ou un angle de lacet et/ou un angle de tangage des satellites, de sorte qu'une zone géographique de la Terre à prendre en images est vue sous un angle d'incidence par rapport au nadir supérieur à un seuil minimum et/ou inférieur à un seuil maximum.

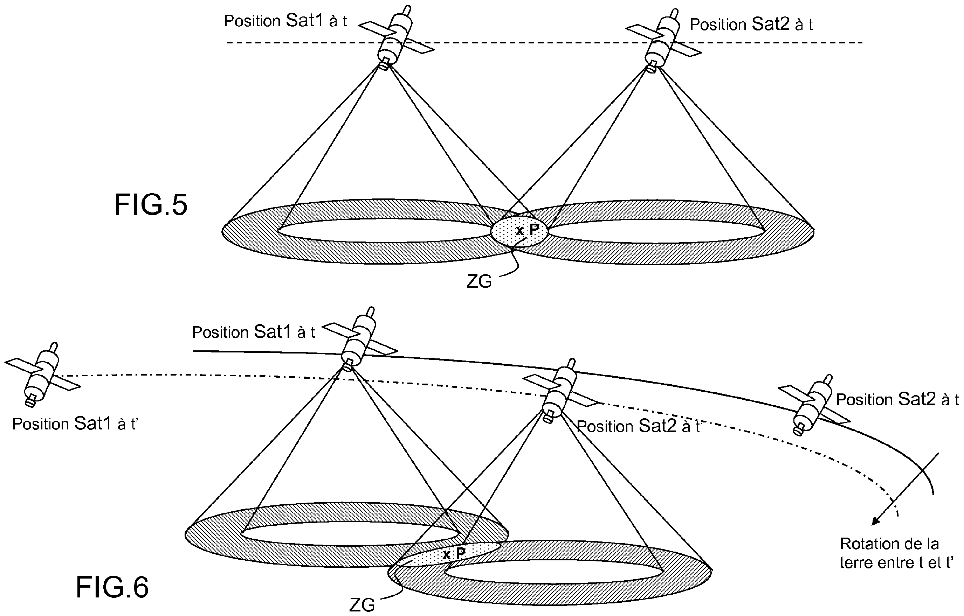

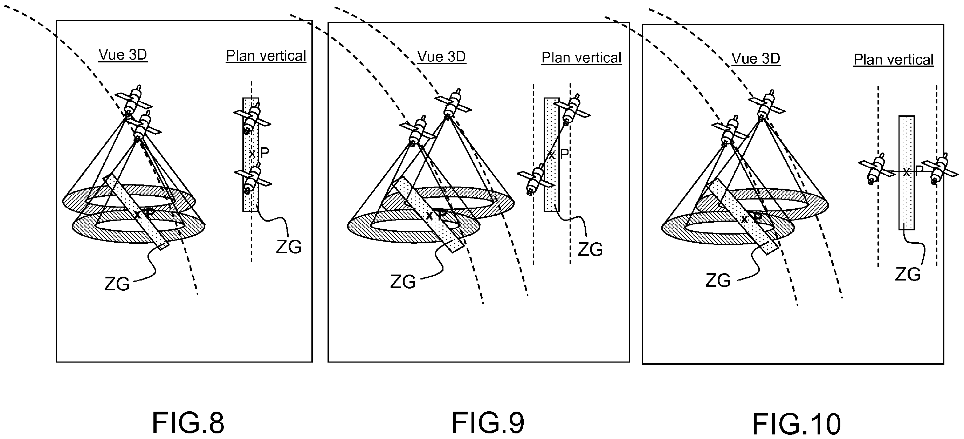

Les figures 5 et 8 illustrent une zone géographique ZG prise en images à deux dimensions, de manière simultanée, par deux satellites d'un ensemble de satellites en orbite géocentrique sur un même plan orbital. Dans cette réalisation, les satellites sont suffisamment proches pour permettre cette acquisition simultanée tout en respectant les contraintes géométriques d'acquisition.

Par exemple, pour deux satellites d'un ensemble de satellites en orbite géocentrique d'altitude 700 km, pour des prise de vues dans un domaine d'angles d'incidences compris entre αₘᵢₙ = 10° et αₘₐₓ = 30°, l'écart entre les deux satellites doit être typiquement compris entre 275 km et 914 km pour permettre cette acquisition simultanée.

Les figures 6 et 9 illustrent une zone géographique ZG prise en images à deux dimensions, à deux instants distincts t et t', entre lesquels la Terre a tourné, par deux satellites d'un ensemble de satellites en orbite géocentrique sur un même plan orbital. L'acquisition à deux instants distincts permet, grâce à la rotation de la Terre, des conditions géométriques d'acquisition variées : en fonction de l'écartement des satellites, les positions relatives au moment des prises de vues impliquent que l'orientation du plan stéréoscopique défini par le premier satellite, la zone géographique à imager, et le second satellite, peut varier de l'axe du plan orbital à la perpendiculaire au plan orbital, balayant ainsi toutes les conditions de prise de vue de ladite zone : plan stéréoscopique Nord-Sud, Est-Ouest, et tous les cas intermédiaires sont accessibles.

La commande de l'espacement des satellites permet ainsi pour une zone de latitude donnée, de contrôler les conditions d'acquisition stéréoscopique.

Par exemple, pour des observations aux instants respectifs de prises d'images de la zone géographique de la Terre, les satellites sont situés de part et d'autre d'une droite verticale perpendiculaire à ladite zone géographique, et la zone géographique est également vue par le satellite poursuivant sous un angle d'incidence par rapport au nadir supérieur à un seuil minimum αₘᵢₙ = 10° et/ou inférieur à un seuil maximum αₘₐₓ= 30°. Un écartement des satellites d'environ 7400 km pour une orbite héliosynchrone à 700 km d'altitude permet des acquisitions entre des latitudes allant de l'équateur (0°) à 65°, dans des conditions d'orientation du plan d'acquisition stéréoscopique variant en fonction de la latitude : de Est-Ouest à l'équateur, à Nord-Sud aux hautes latitudes. A l'inverse, le réglage de l'écartement des satellites permet de contrôler l'orientation du plan d'acquisition stéréoscopique pour une zone à observer située à une latitude donnée.

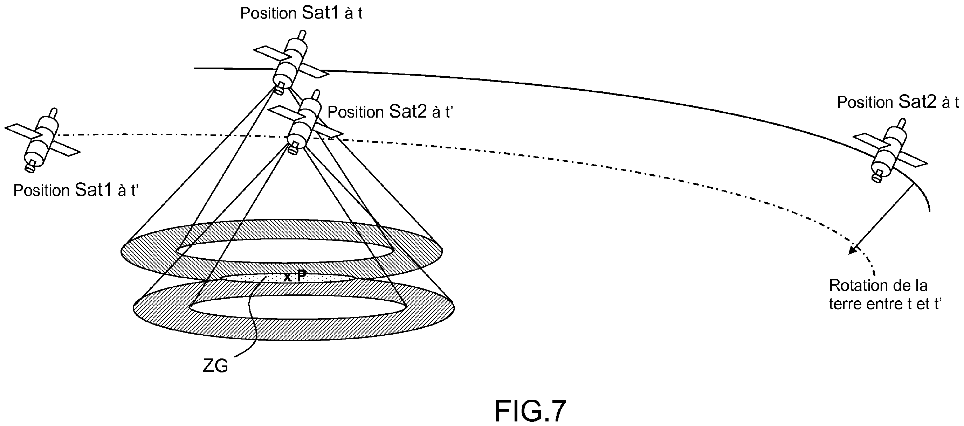

Les figures 7 et 10 illustrent une zone géographique ZG prise en images à deux dimensions, à deux instants distincts t et t', entre lesquels la Terre a tourné et correspondant à un écart maximum entre les deux satellites d'un ensemble de satellites en orbite géocentrique sur un même plan orbital.

Un écart supérieur ferait que les projections au sol des domaines d'incidences respectifs de chaque satellite [αₘᵢₙ, αₘₐₓ] n'auraient pas d'intersection, la Terre ayant trop tourné entre les instants respectifs de passage des satellites en visibilité de la zone géographique à observer. Les conditions géométriques d'acquisition et la latitude de la zone à observer limitent donc les écarts possibles entre les satellites considérés pour une acquisition.

Par exemple, pour des satellites sur une orbite héliosynchrone à 700 km d'altitude, il n'est plus possible d'observer les latitudes équatoriales et tropicales sous des conditions géométriques conformes à l'acquisition stéréoscopiques si les satellites sont éloignés de plus de typiquement 9000 km. A l'inverse, l'observation de zones géographiques à très haute latitude avec un plan stéréoscopique perpendiculaire au plan orbital ne peut être effectuée qu'avec un très fort écartement des satellites, du fait du rapprochement des méridiens au pôle.

Par exemple, pour des satellites sur une orbite héliosynchrone à 700 km, un écartement de 13500 km des satellites est nécessaire pour permettre une telle acquisition à environ 80° de latitude.

La présente invention a donc un caractère global d'applicabilité, au sens géographique, car elle et permet l'acquisition de scènes stéréo avec une grande diversité paramétrique :
- pour une configuration donnée du système (paramétrage de l'écartement des satellites) le contrôle continu des instants d'acquisition et des lignes de visée des satellites à l'intérieur du domaine minimal et maximal d'incidence permet d'imager des zones étendues en stéréo (caractère global d'applicabilité) ;
- à l'inverse, le paramétrage de l'écartement des satellites et des instants d'acquisition permet de couvrir toutes les latitudes de la Terre dans des conditions de prise de vue permettant une restitution stéréoscopique et à l'intérieur du domaine d'incidence minimum-maximum indiqué ;
- le paramétrage de l'écartement des satellites et des instants d'acquisition permet également d'acquérir des données selon une variété de points de vue par rapport à une scène donnée, depuis l'axe du plan orbital (vues axiales avant arrière) jusqu'à l'axe perpendiculaire (vues latérales droite/gauche), à l'intérieur du domaine d'incidence min-max indiqué.

## Revendications

1. Système d'imagerie spatiale en trois dimensions comprenant :
- au moins deux satellites (Sat1, Sat2) en orbite géocentrique sur un même plan orbital, d'altitude inférieure ou égale à 2000 km, au moins deux desdits satellites (Sat1, Sat2) étant munis d'un équipement d'imagerie optique en deux dimensions et de moyens de transmission au sol des images acquises en deux dimensions dans une configuration d'acquisition stéréoscopique entre les satellites,
- au moins une station de réception de données au sol, reliée à un réseau de communications,
- au moins un centre de traitement des images reçues en deux dimensions desdits satellites pour créer des images résultantes en trois dimensions et de diffusion desdites images résultantes en trois dimensions, ledit centre de traitement étant relié audit réseau de communications, et
- des moyens de commande desdits au moins deux desdits satellites (Sat1, Sat2) adaptés pour commander lesdits au moins deux desdits satellites (Sat1, Sat2) de sorte qu'une zone géographique (ZG) de la Terre à prendre en images est vue sous un angle d'incidence (α) par rapport au nadir supérieur à un seuil minimum (αₘᵢₙ) et/ou inférieur à un seuil maximum (αₘₐₓ), par commande desdits au moins deux desdits satellites (Sat1, Sat2) de sorte que l'espacement entre lesdits satellites permet l'observation de la zone à imager par prise d'images à des instants différents ou sensiblement identiques, et par commande desdits au moins deux desdits satellites (Sat1, Sat2) en angle de roulis et/ou angle de lacet et/ou angle de tangage.

2. Système selon l'une des revendications précédentes, dans lequel ledit seuil minimum vaut sensiblement 0°, et/ou ledit seuil maximum vaut 30°.

3. Système selon la revendication 1 ou 2, dans lequel lesdits moyens de commande sont, en outre, adaptés pour commander lesdits au moins deux desdits satellites de sorte que deux desdits satellites commandés, aux instants respectifs (t, t') de prises d'images de la zone géographique (ZG) de la Terre, soient situés de part et d'autre d'une droite verticale (DV) perpendiculaire à ladite zone géographique (ZG).

## Patentansprüche

1. Räumliches 3D-Bildgebungssystem, Folgendes beinhaltend:
- mindestens zwei Satelliten (Sat1, Sat2) in geozentrischer Umlaufbahn in derselben Umlaufbahnebene, mit einer Höhe von kleiner oder gleich 2.000 km, wobei mindestens zwei der Satelliten (Sat1, Sat2) mit einer optischen 2D-Bildgebungsausrüstung und mit Mitteln zum Übertragen an den Boden der in einer stereoskopischen Erfassungskonfiguration zwischen den Satelliten in 2D erfassten Bilder versehen sind,
- mindestens eine Datenempfangsstation am Boden, welche mit einem Kommunikationsnetzwerk verbunden ist,
- mindestens ein Verarbeitungszentrum der empfangenen 2D-Bilder der Satelliten, zum Erstellen von resultierenden 3D-Bildern und zur Ausstrahlung der resultierenden 3D-Bilder, wobei das Verarbeitungszentrum mit dem Kommunikationsnetzwerk verbunden ist, und Steuerungsmittel der mindestens zwei der Satelliten (Sat1, Sat2), welche geeignet sind, um die mindestens zwei der Satelliten (Sat1, Sat2) zu steuern in der Weise, dass ein geografischer Bereich (ZG) der Erde, welcher bildlich aufgenommen werden soll, in einem Einfallwinkel (α) in Bezug auf den Nadir, welcher höher ist als ein minimaler Grenzwert (αmin) und/oder niedriger ist als ein maximaler Grenzwert (αmax), durch Steuern der mindestens zwei der Satelliten (Sat1, Sat2) in der Weise, dass der Abstand zwischen den Satelliten die Beobachtung des durch Bildaufnahme abzubildenden Bereichs zu unterschiedlichen oder im Wesentlichen identischen Zeitpunkten ermöglicht, und durch Steuern der mindestens zwei der Satelliten (Sat1, Sat2) in Bezug auf den Roll- und/oder den Gier- und/oder den Nickwinkel.

2. System nach einem der vorhergehenden Ansprüche, bei welchem der minimale Grenzwert im Wesentlichen 0° beträgt, und/oder der maximale Winkel 30° beträgt.

3. System nach Anspruch 1 oder 2, bei welchem die Steuerungsmittel zudem geeignet sind, um die mindestens zwei der Satelliten so zu steuern, dass zwei der gesteuerten Satelliten zu den jeweiligen Bildaufnahmezeitpunkten (t, t') des geografischen Bereichs (ZG) der Erde beiderseits einer vertikalen Gerade (DV) befindlich sind, welche rechtwinklig zum geografischen Bereich (ZG) ist.

## Claims

1. A system for space-based imaging in three dimensions comprising:
- at least two satellites (Sat1, Sat2) in a geocentric orbit in a same orbital plane, with an altitude equal or less than 2000 km, at least two of said satellites (Sat1, Sat2) being equipped with equipment for optical imaging in two dimensions and with means for transmitting to the ground images acquired in two dimensions in a configuration for stereoscopic acquisition between the satellites,
- at least one data receiving station on the ground, connected to a communications network,
- at least one centre for processing the images received in two dimensions from said satellites in order to create resulting images in three dimensions and to broadcast said resulting images in three dimensions, said processing centre being connected to said communications network, and
- means for controlling said at least two of said satellites (Sat1, Sat2) designed to control said at least two of said satellites (Sat1, Sat2) such that a geographical area (ZG) of the Earth of which images are to be taken is seen under an angle of incidence (α) with respect to a nadir greater than a minimum threshold (αₘᵢₙ) and/or less than a maximum threshold (αₘₐₓ) by controlling said at least two satellites (Sat1, Sat2) in such a manner that the separation between said satellites allows observation of the area to be imaged at different or substantially identical times and by controlling said at least two satellites (Sat1, Sat2) at a roll angle and/or yaw angle and/or pitch angle.

2. The system according to any one of the preceding claims, in which said minimum threshold is substantially equal to 0°, and/or said maximum threshold is equal to 30°.

3. The system according to claim 1 or 2, in which said control means are, in addition, designed to control the said at least two of said satellites in such a manner that, at the respective times (t, t') when images of the geographical area (ZG) of the Earth are taken, two of said controlled satellites are situated on either side of a vertical line (DV) perpendicular to said geographical area (ZG).
